# EUROPEAN PATENT SPECIFICATION

(11) **EP 2 072 848 B1**
(45) Date of publication and mention of the grant of the patent: **02.03.2011**
(21) Application number: 07024837.2
(22) Date of filing: 20.12.2007
(51) Int. Cl.: F16D 23/02, F16H 61/04

(54) **An arrangement and method for testing at least one synchronizer**
Anordnung und Verfahren zum Prüfen mindestens eines Synchronisators
Agencement et procédé pour tester au moins un synchroniseur

(43) Date of publication of application: 24.06.2009
(73) Proprietor: GM Global Technology Operations, Inc., Detroit MI 48265-3 (US)
(72) Inventor: Bejlim, Göran, 46236 Vänersborg (SE)
(74) Representative: Strauss, Peter

(56) References cited:
- EP-A- 1 273 825
- DE-A1- 10 350 932
- US-A- 3 915 271
- US-A1- 2004 055 844

## Description

The invention relates to a method for testing at least one synchronizer, for example a synchronizer of an automotive manual transmission gearbox.

In order to shift gears in an automotive manual transmission gearbox, the rotational speed of the input shaft and the output shaft are synchronized by use of synchronizing devices, which are also referred to simply as synchronizers.

US 3,915,271 discloses a method and apparatus for electronically controlling the engagement of coacting propulsion systems which include a primary and auxiliary power system.

US 2004/0055844 A1 discloses an automatic transmissions for a vehicle having at least one shift control element formed at least of a second shift control element half that can be brought into active frictional engagement with a first shift control element half.

EP 1 273 825 A1 discloses a gearbox having a primary shaft and at least one parallel secondary shaft supporting several fixed cogs and several idler pinions which mesh with the cogs. The idler pinions can be connected to rotate with their shaft by a coupling during engagement of a gear.

DE 103 50 932 A1 discloses a synchronizing control for a motor vehicle automatic transmission uses single or double clutch operation. The synchronizer has a free pinion and a shift sleeve with a synchronizing ring between them. The sides of the pinion and shift sleeve facing the synchronizer ring can have lugs defining a dog clutch. The torque transfer system is positioned between the engine and transmission and has a friction clutch and an electronic control system using sensors for throttle position and engine speed.

Synchronizing devices as well as complete synchronizing systems and gearshift mechanisms, such as an automotive manual transmission gearbox, are bench tested by carrying out continuous shifting tests. These tests may be carried out during production development, for example by examining the lifetime of synchronizing parts having different design parameters and/or different materials, different lubricants and temperatures. Tests may also be carried out for monitoring quality control of the synchronising parts and/or lubricants.

In order to test the synchronizers on a test bench, a shift robot is used to actuate the synchronizing devices and shift gears. In order to simulate vehicle gearshifts, the gearshift robot should be able to operate accurately and quickly. However, the shift robot can be difficult to tune and to adjust to the correct shift speed. Consequently, the repeatability of the tests is limited.

It is, therefore, an object of the invention to provide a method by which synchronizers can be bench tested in an improved manner.

This object is solved by the subject matter of the independent claims. Further developments are the subject matter of the dependent claims.

An arrangement for testing at least one synchronizer comprises a first rotary drive means and a second rotary drive means.

The system under test comprises an output shaft, at least one synchronizer and an input shaft. The output shaft is coupleable to and decoupleable from the input shaft by actuating the synchronizer or synchronizers. The system under test may be a manual transmission gearbox, for example, comprising a plurality of gears each associated with a synchronizer.

The first rotary drive means is adapted to be coupled to the output shaft and to drive the output shaft. The second rotary drive means is adapted to be coupled to and decoupled from the input shaft. The second rotary drive means is further adapted to be coupled to the input shaft and to control the rotational speed of the input shaft when the synchronizer is disengaged from the output shaft.

In the invention, both the output shaft as well as the input shaft can be driven by means of the first rotary drive means and the second rotary drive means, respectively. During bench testing of the synchronizer, the output shaft is the driving shaft and drives the input shaft when the input shaft is coupled to the output shaft by the synchronizer.

According to the invention, the input shaft can be driven by either the output shaft or by the second rotary drive means. In the case that the input shaft is driven by the second rotary drive means, the input shaft is decoupled from the output shaft so that its rotational speed (rpm revolutions per minute) can be adjusted independently of the rotational speed (rpm) of the output shaft.

By controlling the rotational speed of the input shaft when it is decoupled from the output shaft, the difference in rotational speed between the input shaft and the output shaft can be controlled. Therefore, not only a desired rpm of the input shaft but a desired difference in the speed of rotation between the input shaft and the output shaft can be provided by use of the second rotary drive means which is coupleable to the input shaft. Hereinafter the difference in the speed of rotation between the input shaft and the output shaft will be referred to as the delta rpm.

A method for testing at least one synchronizer according to the invention comprises the following steps:
- driving an output shaft by a first rotary drive means, the output shaft being coupleable to an input shaft by at least one synchronizer,
- actuating the synchronizer to couple the input shaft with the output shaft,
- actuating the synchronizer to decouple the input shaft from the output shaft,
- controlling the rpm of the input shaft to achieve a desired value by coupling a second rotary drive means to the input shaft whilst the input shaft is decoupled from the output shaft,
- decoupling the second rotary drive means from the input shaft when the rpm of the input shaft has a desired value,
- actuating the synchronizer to couple the input shaft with the output shaft.

The input shaft is coupled to the output shaft and, therefore, rotates at the same speed as the output shaft since the output shaft drives the input shaft in the method of testing according to the invention. The input shaft is then decoupled from the output shaft and, afterwards, the second rotary drive means is coupled to the input shaft and used to control the rpm of the input shaft independently of the rpm of the output shaft. When the desired rpm of the input shaft is reached, the second rotary drive means is decoupled from the input shaft and the now freely rotating input shaft is recoupled to the output shaft. This sequence of steps corresponds to a gearshift in a manual transmission.

The method of the invention enables the difference in the speed of rotation between the input shaft and output shaft to be finely adjusted. Therefore, the time in which the input shaft is freely rotating, equivalent to the time spent in neutral without controlling the rpm, may be shortened. Consequently, the influence of the drag torque can be minimised.

This has the advantage that the synchronizer can be tested under better controlled and repeatable conditions. The method can be used for both durability testing as well as functional testing. The test lead time may also be reduced as less dwell time is required between shifts. Furthermore, less costly and complicated shift robots may be used to carry out the method since the performance required by the shift robot can be reduced as the delta rpm is controlled accurately by use of the second rotary drive means before initiating the synchronizer.

Therefore, in an embodiment the rpm of the input shaft is controlled by the second rotary drive means in order that the difference in rpm between input shaft and the output shaft has a desired value.

In a further embodiment, the output shaft is coupled to a drive shaft which is driven by the second rotary drive means. This arrangement is useful when testing synchronizers in the form of a gearbox system.

The second rotary drive means may be coupled to the input shaft by an actuating device such as an on/off clutch. The on/off clutch may be a magnetic clutch. This enables the secondary rotary drive means to be quickly coupled and decoupled to the input shaft and the rpm of the input shaft to be quickly and accurately controlled between gear shifts.

The first rotary drive means and the second rotary drive means may each be provided by an electric motor. An electric motor has the advantage that rotational speeds typical of automotive vehicles can be provided and can be easily and accurately controlled. However, any means for producing rotation of the shafts could be used.

In an embodiment, the synchronizer comprises a synchronizer sleeve, a synchronizer ring and a synchronizer cone fixedly attached to a driven gearwheel which is coupleable to the output shaft. The synchronizer may be associated with a gear of a manual transmission gear box. In this case, the gear comprises a driving gearwheel which is fixedly attached to the input shaft and a driven gearwheel which is meshed with the driving gearwheel and which is carried on a bearing on the output shaft.

To couple the input shaft with the output shaft, the synchronizer sleeve is engaged with the driven gearwheel. The synchronizer sleeve is disengaged from the driven gearwheel to decouple the input shaft from the output shaft.

Considering the actuation of the synchronizer in further detail, the synchronizer sleeve is engaged with the synchronizer cone by first pushing the synchronizer ring onto the synchronizer cone. The inner surface of the synchronizer ring fits the outer shape of the synchronizer cone so as to act as a frictional brake and slow down the speed of rotation of the synchronizer cone and driven gearwheel. When the difference in the rpm between the synchronizer ring and the synchronizer cone is zero, the synchronizer sleeve is able to pass over the synchronizer ring and engage with the driven gearwheel. This is typically achieved by dog teeth of the synchronizer sleeve engaging corresponding slots in the driven gearwheel.

In other words, synchronizer may be of the type typically used in automotive manual transmission gearboxes.

In further embodiments, the method is repeated so as to repeatedly couple the input shaft with the output shaft by the same synchronizer. This method would be used to test durability of a single synchronizer, for example.

In another embodiment, the method is repeated so as to repeatedly couple the input shaft with the output shaft by means of different synchronizers. This method simulates gear shifts in automotive transmission gearbox.

The synchronizer may be tested as a single component or as a component of an automotive manual transmission gearbox. In other words, the gearbox system may be tested using the method and arrangement of the invention.

However, the method of the invention may also be used to test a single synchronizer in a test situation when the further components of the gearbox, for example further synchronizers, are not present. This method could be used for production development purposes in order to investigate the effect of different materials on the wear of a particular synchronizer or to investigate the effect of varying the lubricant on a particular synchronizer, for example.

The arrangement may further include a drive shaft which is driven by the first rotary drive means and which is coupled to the output shaft. The arrangement may also further comprise an on/off clutch via which the second rotary drive means is coupled to and decoupled from the input shaft. The on/off clutch may be a magnetic clutch, for example.

In a further embodiment, the arrangement further comprises means for applying an additional inertia to the input shaft. This inertia can be used to simulate the effect of a clutch disk, for example. The arrangement may, therefore, in a further embodiment further comprise a second clutch which applies inertia to the input shaft. The second clutch is, however, not used to couple the second rotary drive means to the input shaft during testing.

In a further embodiment of the invention, the means for applying an inertia to the input shaft is capable of being adjusted in such a way so as to vary the inertia applied to the input shaft. This embodiment enables the effect of different clutch discs, for example, on gear shifting behaviour to be investigated.

The second rotary drive means may be thought of as a delta rpm controller which controls the rpm of the input shaft to provide any desired delta rpm. At bench testing of synchronizers, the gearbox takes on a specific rpm and is driven by the first rotary means on the drive shafts (half shafts). When a gear is disengaged, the shift lever moves to neutral and the delta rpm controller takes control of the rpm of the input shaft by use of a fast actuating connection, such as a small magnetic clutch. The delta rpm controller is controlled so as to adjust the delta rpm between input shaft and the output shaft to the desired value. At the moment for activating the synchronizer by moving shift lever, the magnetic clutch releases the input shaft, decoupling the input shaft form the delta rpm controller. The input shaft can rotate the freely as normal during the following synchronisation. By using this method, the influence of the drag torque can be reduced by shortening the time spent in neutral without control of the rpm of the input shaft.

Embodiments will now be described with reference to the drawing.
- Figure 1: illustrates a schematic diagram of an arrange- ment for testing a synchronizer,
- Figure 2: illustrates a synchronizer which can be tested with the arrangement and method of the inven- tion, and
- Figure 3: illustrates a synchronizer coupling an input shaft with an output shaft during testing of the synchronizer.

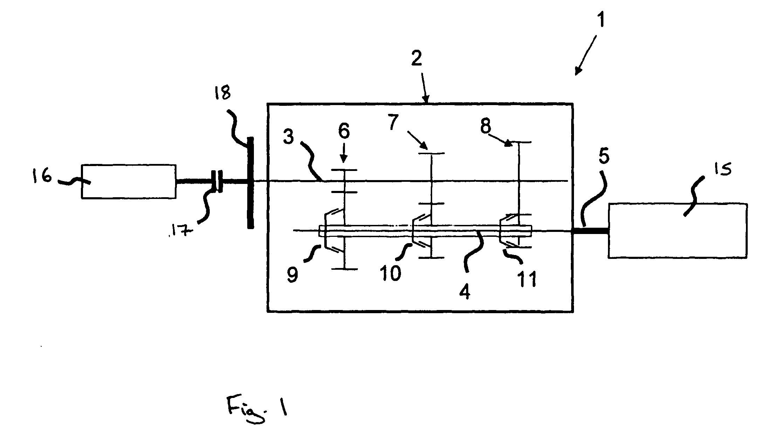

Figure 1 illustrates an arrangement 1 for testing an automotive manual transmission gearbox 2. The gearbox 2 comprises an input shaft 3 and an output shaft 4 which is arranged generally parallel to the input shaft 3.

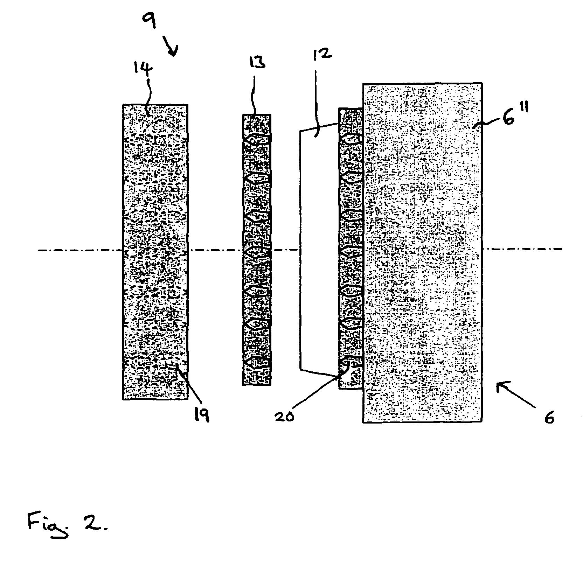

The gearbox 2 further comprises, by way of example, three gears 6, 7, 8 each including a synchronizer 9, 10, 11, respectively. However, the gearbox may have any number of gears, for example 5 or 6. A synchronizer is illustrated in more detail in Figure 2. Each gear 6, 7, 8 also comprises a driving gear wheel 6', 7', 8' fixed to the input shaft 3 which is meshed with a driven gear wheel 6" , 7", 8", respectively, carried in a bearing on the output shaft 4.

Each synchronizer 9, 10, 11 includes a synchronizing cone 12 fixedly attached to its respective driven gear wheel 6", 7", 8", a synchronizing ring 13 engageable with the synchronizer cone 12 and a synchronizer sleeve 14 which is engageable with the driven gearwheel 6" by way of dog teeth 19.

When changing gear in an vehicle with manual transmission, the gear shift lever is moved from neutral into a gear position, such as first gear, in order to actuate the synchronizer of the gear and couple the input shaft to the output shaft by this gear.

In order to couple the input shaft 3 with the output shaft 4, the synchronizer ring 13 is pushed onto the synchronizer cone 12 by the synchronizer sleeve 14 which is in turn moved by the gear lever. The inner surface of the synchronizer ring 13 fits the outer shape of the synchronizer cone 12 so as to act as a frictional brake.

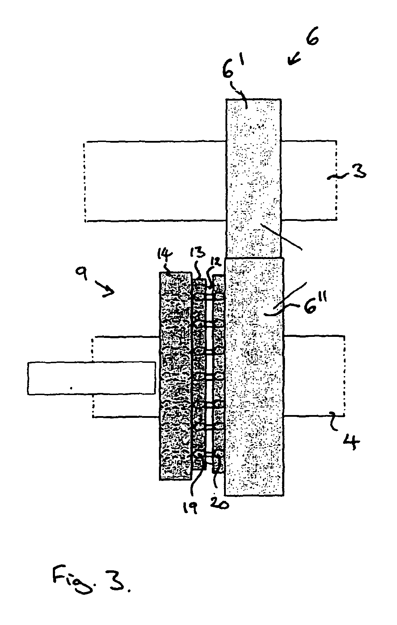

When the differential rpm between the synchronizer ring 13 and the synchronizer cone 12 is zero, the synchronizer sleeve 14 can pass over the synchronizer ring 13 and the dog teeth 19 of the synchronizer sleeve 14 can detachedly engage with dog teeth 20 of the gearwheel 6" so that the driven gearwheel 6" is connected to the output shaft 4. In this position, torque is transferred from the input shaft 3 to the output shaft 4. This arrangement of the synchronizer 9 is illustrated in Figure 3.

The method of testing a synchronizer is not, however, limited to the synchronizer type illustrated in Figures 2 and 3 and may be used for testing other synchronizer device designs.

This process is simulated in bench testing by using shift robots to shift gears and actuate the synchronizers. In contrast to the situation in a vehicle, during bench testing the output shaft 4 is the driving shaft and the input shaft 3 is the driven shaft.

The arrangement 1 for testing the gearbox 2 according to the invention comprises a first electric motor 15 which is coupled to and drives the drive shaft 5 and, therefore, drives the output shaft 4. The arrangement 1 further includes a second electric motor 16 which is coupleable to the input shaft 3. The second electric motor 16 drives the input shaft 3 when it is coupled to the input shaft 3. A magnetic fast actuating on/off clutch 17 is arranged on the input shaft 3 so that the second electric motor 16 can be coupled to and decoupled form the input shaft 3.

An ordinary clutch disc 18, as would be used by a driver when changing gear in an automobile with manual transmission, is also illustrated in the figure. The ordinary clutch disc 18 is not used for testing of the gearbox 2 and remains decoupled from the input shaft 3 during the method of testing according to the invention. The ordinary clutch disc 18 provides a inertia to the input shaft 3 during testing.

A method of testing a synchronizer according to the invention may be carried out as follows. Synchronizer 9 is actuated by detachedly engaging the synchronizer sleeve 14 with the synchronising cone 12 and the driven gearwheel 6". The output shaft 4 is driven by the first electric motor 12. Since the output shaft 4 is coupled by the synchronizer 9 of gear 6 to the input shaft 3, the output shaft 4 drives the input shaft 3 so that the input shaft 3 and the output shaft 4 rotate with an rpm controlled by the first electric motor 15.

The input shaft 3 is then decoupled from the output shaft 4 by actuating the synchronizer 9 so as to disengage the synchronizer sleeve 14 from the driven gearwheel 6". The magnetic clutch 17 is actuated so as to couple the second electric motor 16 to the input shaft 3 and to control the rpm of the input shaft 3 independently of the speed of rotation of the output shaft 4. The speed of rotation of the input shaft 3 is adjusted by controlling the second electric motor 16 so as to provide a desired difference in the speed of rotation between the input shaft 3 and the output shaft 4, that is a desired delta rpm.

When the desired value of the delta rpm has been reached, the magnetic clutch 17 is actuated to decouple the second electric motor 16 from the input shaft 3 allowing the input shaft 3 to rotate freely. Synchronizer 10 of gear 7 is then actuated so as to couple the input shaft 3 with the output shaft 4 by engaging synchronizer sleeve 14 with the gearwheel 7" of gear 7.

In this embodiment the first synchronizer 9 is disengaged and afterwards a different synchronizer, in this case the second synchronizer 10 engaged. In further embodiments, in the next cycle of the method steps the second synchronizer 10 is disengaged and the third synchronizer 11 engaged. These steps may be repeated many times to test all three synchronizers 9, 10, 11.

The steps of the method may also be repeated so as to repeatedly couple and decouple the input shaft 3 and the output shaft 4 by repeatedly engaging and disengaging a single synchronizer, for example, the synchronizer 9.

### Reference numbers

- 1: arrangement
- 2: gearbox
- 3: input shaft
- 4: output shaft
- 5: drive shaft
- 6: first gear
- 6': driving gear
- 6": driven gear
- 7: second gear
- 7': driving gear
- 7": driven gear
- 8: third gear
- 8': driving gear
- 8": driven gear
- 9: first synchronizer
- 10: second synchronizer
- 11: third synchronizer
- 12: synchronizing cone
- 13: synchronizing ring
- 14: synchronizing sleeve
- 15: first electric motor
- 16: second electric motor
- 17: one/off clutch
- 18: ordinary clutch
- 19: dog tooth
- 20: dog tooth

## Claims

1. A method for testing at least one synchronizer (9, 10, 11), comprising:
- driving an output shaft (4) by a first rotary drive means (15), the output shaft (4) being coupleable to an input shaft (3) by at least one synchronizer (9, 10, 11),
- actuating the synchronizer (9, 10, 11) to couple the input shaft (3) with the output shaft (4),
- actuating the synchronizer (9, 10, 11) to decouple the input shaft (3) from the output shaft (4),
- controlling the rotational speed of the input shaft (3) to achieve a desired value by coupling a second rotary drive means (16) to the input shaft (3) whilst the input shaft (3) is decoupled from the output shaft (4),
- decoupling the second rotary drive means (16) from the input shaft (3) when the rotational speed of the input shaft (3) has a desired value,
- actuating the synchronizer (9, 10, 11) to couple the input shaft (3) with the output shaft (4).

2. Method according to claim 1,
**characterized in that**
the rotational speed of the input shaft (3) is controlled by the second rotary drive means (16) in order that the difference in rotational speed between the input shaft (3) and the output shaft (4) has a desired value.

3. Method according to claim 1 or claim 2,
**characterized in that**
the second rotary drive means (16) is coupled to and decoupled from the input shaft (3) by actuating an on/off clutch (17).

4. Method according to claim 3,
**characterized in that**
the on/off clutch (17) is a magnetic clutch.

5. Method according to one of claims 1 to 4,
**characterized in that**
the first rotary drive means (15) is provided by an electric motor

6. Method according to one of claims 1 to 5,
**characterized in that**
the second rotary drive means (16) is provided by an electric motor.

7. Method according to one of claims 1 to 6,
**characterized in that**
the synchronizer (9, 10, 11) comprises a synchronizer sleeve (14), a synchronizer ring (13) and a synchronizer cone (12) fixedly attached to a driven gearwheel (6", 7", 8") coupleable to the output shaft (4), wherein the synchronizer sleeve (14) is engaged with the driven gearwheel (6", 7", 8") to couple the input shaft (3) with the output shaft (4).

8. Method according to claim 7,
**characterized in that**
the synchronizer sleeve (14) is disengaged from the driven gearwheel (6", 7", 8") to decouple the input shaft (3) with the output shaft (4).

9. Method according to one of claims 1 to 8,
**characterized in that**
the method is repeated to repeatedly couple the input shaft (3) with the output shaft (4) by the same synchronizer (9, 10, 11).

10. Method according to one of claims 1 to 8,
**characterized in that**
the method is repeated to repeatedly couple the input shaft (3) with the output shaft (4) by different synchronizers (9, 10, 11).

11. Method according to one of claims 1 to 10,
**characterized in that**
the synchronizer (9, 10, 11) is a component of an automotive manual transmission gearbox (2).

12. Method according to one of claims 1 to 11,
**characterized in that**
an inertia is applied to the input shaft (3).

## Patentansprüche

1. Verfahren zum Prüfen mindestens eines Synchronisators (9, 10, 11), das Folgendes umfasst:
- Antreiben einer Abtriebswelle (4) durch ein erstes Rotationsantriebsmittel (15), wobei die Abtriebswelle (4) durch mindestens einen Synchronisator (9, 10, 11) mit einer Eingangswelle (3) koppelbar ist,
- Betätigen des Synchronisators (9, 10, 11), zum Koppeln der Eingangswelle (3) mit der Abtriebswelle (4),
- Betätigen des Synchronisators (9, 10, 11) zum Entkoppeln der Eingangswelle (3) von der Abtriebswelle (4),
- Steuern der Rotationsgeschwindigkeit der Eingangswelle (3), um einen erwünschten Wert zu erhalten, indem ein zweites Rotationsantriebsmittel (16) mit der Eingangswelle (3) gekoppelt wird, während die Eingangswelle (3) von der Abtriebswelle (4) entkoppelt ist,
- Entkoppeln des zweiten Rotationsantriebsmittels (16) von der Eingangswelle (3), wenn die Rotationsgeschwindigkeit der Eingangswelle (3) einen erwünschten Wert hat,
- Betätigen des Synchronisators (9, 10, 11), um die Eingangswelle (3) mit der Abtriebswelle (4) zu koppeln.

2. Verfahren gemäß Anspruch 1,
**dadurch gekennzeichnet, dass**
die Rotationsgeschwindigkeit der Eingangswelle (3) vom zweiten Rotationantriebsmittel (16) gesteuert wird, so dass die Differenz der Rotationsgeschwindigkeiten zwischen der Eingangswelle (3) und der Abtriebswelle (4) einen erwünschten Wert hat.

3. Verfahren gemäß Anspruch 1 oder Anspruch 2,
**dadurch gekennzeichnet, dass**
das zweite Rotationsantriebsmittel (16) an die Eingangswelle (3) gekoppelt und von dieser entkoppelt wird, indem eine Ein/Aus-Kupplung (17) betätigt wird.

4. Verfahren gemäß Anspruch 3,
**dadurch gekennzeichnet, dass**
die Ein/Aus-Kupplung (17) eine magnetische Kupplung ist.

5. Verfahren gemäß einem der Ansprüche 1 bis 4,
**dadurch gekennzeichnet, dass**
das erste Rotationsantriebsmittel (15) von einem Elektromotor bereitgestellt wird.

6. Verfahren gemäß einem der Ansprüche 1 bis 5,
**dadurch gekennzeichnet, dass**
das zweite Rotationsantriebsmittel (16) von einem Elektromotor bereitgestellt wird.

7. Verfahren gemäß einem der Ansprüche 1 bis 6,
**dadurch gekennzeichnet, dass**
der Synchronisator (9, 10, 11) eine Schaltmuffe (14), einen Synchronring (13) und einen Synchronkegel (12) umfasst, die fest an einem angetriebenen Getrieberad (6", 7", 8") befestig sind, das an die Abtriebswelle (4) gekoppelt werden kann, wobei die Schaltmuffe (14) mit dem angetriebenen Getrieberad (6", 7 ", 8") verbunden ist, um die Eingangswelle (3) mit der Abtriebswelle (4) zu koppeln.

8. Verfahren gemäß Anspruch 7,
**dadurch gekennzeichnet, dass**
die Schaltmuffe (14) vom angetriebenen Getrieberad (6", 7 ", 8") getrennt wird, um die Eingangswelle (3) von der Abtriebswelle (4) zu entkoppeln.

9. Verfahren gemäß einem der Ansprüche 1 bis 8,
**dadurch gekennzeichnet, dass**
das Verfahren wiederholt wird, um die Eingangswelle (3) durch den selben Synchronisator (9, 10, 11) wiederholt mit der Abtriebswelle (4) zu koppeln.

10. Verfahren gemäß einem der Ansprüche 1 bis 8,
**dadurch gekennzeichnet, dass**
das Verfahren wiederholt wird, um die Eingangswelle (3) wiederholt mittels unterschiedlicher Synchronisatoren (9, 10, 11) mit der Abtriebswelle (4) zu koppeln.

11. Verfahren gemäß einem der Ansprüche 1 bis 10,
**dadurch gekennzeichnet, dass**
der Synchronisator (9, 10, 11) eine Komponente eines manuellen Kraftfahrzeug-Getriebes (2) ist.

12. Verfahren gemäß einem der Ansprüche 1 bis 11,
**dadurch gekennzeichnet, dass**
auf die Eingangswelle (3) ein Trägheitselement aufgebracht wird.

## Revendications

1. Procédé pour tester au moins un synchroniseur (9, 10, 11), comprenant :
- l'entraînement d'un arbre de sortie (4) par un premier moyen d'entraînement rotatif (15), l'arbre de sortie (4) pouvant être couplé à un arbre d'entrée (3) par au moins un synchroniseur (9, 10, 11),
- l'actionnement du synchroniseur (9, 10, 11) de façon à coupler l'arbre d'entrée (3) à l'arbre de sortie (4),
- l'actionnement du synchroniseur (9, 10, 11) de façon à découpler l'arbre d'entrée (3) de l'arbre de sortie (4),
- le contrôle de la vitesse de rotation de l'arbre d'entrée (3) de façon à obtenir une valeur souhaitée en couplant un deuxième moyen d'entraînement rotatif (16) à l'arbre d'entrée (3) tandis que l'arbre d'entrée (3) est découplé de l'arbre de sortie (4),
- le découplage du deuxième moyen d'entraînement rotatif (16) de l'arbre d'entrée (3) quand la vitesse de rotation de l'arbre d'entrée (3) a une valeur souhaitée,
- l'actionnement du synchroniseur (9, 10, 11) de façon à coupler l'arbre d'entrée (3) à l'arbre de sortie (4).

2. Procédé selon la revendication 1, **caractérisé en ce que** la vitesse de rotation de l'arbre d'entrée (3) est contrôlée par le deuxième moyen d'entraînement rotatif (16) de telle façon que la différence de vitesse de rotation entre l'arbre d'entrée (3) et l'arbre de sortie (4) ait une valeur souhaitée.

3. Procédé selon la revendication 1 ou 2, **caractérisé en ce que** le deuxième moyen d'entraînement rotatif (16) est couplé à l'arbre d'entrée (3) et découplé de celui-ci par l'actionnement d'un embrayage tout-ou-rien (17).

4. Procédé selon la revendication 3, **caractérisé en ce que** l'embrayage tout-ou-rien (17) est un embrayage magnétique.

5. Procédé selon l'une des revendications 1 à 4, **caractérisé en ce que** le premier moyen d'entraînement rotatif (15) est fourni par un moteur électrique.

6. Procédé selon l'une des revendications 1 à 5, **caractérisé en ce que** le deuxième moyen d'entraînement rotatif (16) est fourni par un moteur électrique.

7. Procédé selon l'une des revendications 1 à 6, **caractérisé en ce que** le synchroniseur (9, 10, 11) comprend un manchon de synchroniseur (14), une bague de synchroniseur (13) et un cône de synchroniseur (12) montés de façon fixe sur une roue dentée entraînée (6", 7", 8") qui peut être couplée à l'arbre de sortie (4), le manchon de synchroniseur (14) se mettant en prise avec la roue dentée entraînée (6", 7", 8") pour coupler l'arbre d'entrée (3) à l'arbre de sortie (4).

8. Procédé selon la revendication 7, **caractérisé en ce que** le manchon de synchroniseur (14) est dégagé de la roue dentée entraînée (6", 7", 8") pour découpler l'arbre d'entrée (3) de l'arbre de sortie (4).

9. Procédé selon l'une des revendications 1 à 8, **caractérisé en ce que** le procédé est répété pour coupler de façon répétée l'arbre d'entrée (3) avec l'arbre de sortie (4) à l'aide du même synchroniseur (9, 10, 11).

10. Procédé selon l'une des revendications 1 à 8, **caractérisé en ce que** le procédé est répété pour coupler de façon répétée l'arbre d'entrée (3) avec l'arbre de sortie (4) à l'aide de synchroniseurs (9, 10, 11) différents.

11. Procédé selon l'une des revendications 1 à 10, **caractérisé en ce que** le synchroniseur (9, 10, 11) est un composant d'une boîte de transmission manuelle (2) d'automobile.

12. Procédé selon l'une des revendications 1 à 11, **caractérisé en ce qu'**une inertie est appliquée à l'arbre d'entrée (3).
